# EUROPÄISCHE PATENTSCHRIFT

(11) **EP 3 381 731 B1**
(45) Veröffentlichungstag und Bekanntmachung des Hinweises auf die Patenterteilung: **04.12.2019**
(21) Anmeldenummer: 18161548.5
(22) Anmeldetag: 13.03.2018
(51) Int. Cl.: B60K 26/02, F02D 11/02, G05G 1/30, G05G 5/03, H02K 33/12

(54) **FAHRPEDALVORRICHTUNG MIT HAPTISCHER SIGNALGEBUNG**
DRIVE PEDAL DEVICE WITH HAPTIC SIGNALLING
DISPOSITIF DE PÉDALE D'ACCÉLÉRATEUR À SIGNALISATION HAPTIQUE

(30) Priorität: 25.03.2017 DE 102017002883
(43) Veröffentlichungstag der Anmeldung: 03.10.2018
(73) Patentinhaber: MAN Truck & Bus SE, 80995 München (DE)
(72) Erfinder: Weller, Ralf, 80638 München (DE); Bundschuh, Linus, 85757 Karlsfeld (DE); Bamberger, Nicolai, 80995 München (DE)
(74) Vertreter: v. Bezold & Partner Patentanwälte - PartG mbB

(56) Entgegenhaltungen:
- DE-A1- 2 555 429
- DE-A1- 19 506 629
- DE-U1-202010 007 324
- US-B2- 9 072 576

## Beschreibung

Die Erfindung betrifft eine Fahrpedalvorrichtung mit haptischer Signalgebung für ein Kraftfahrzeug.

Während des Betriebs des Kraftfahrzeugs betätigt der Fahrer in der Regel ein Fahrpedal des Kraftfahrzeugs, welches auch als Gaspedal bezeichnet wird. Das Fahrpedal kann daher einen Kommunikationskanal bzw. eine Schnittstelle zwischen dem Kraftfahrzeug und dem Fahrer bereitstellen, über welche haptische Signale zuverlässig wahrnehmbar an den Fahrer übermittelt werden können.

Insgesamt können haptische Meldungen bzw. Signale schneller von dem Fahrer erfasst werden, und eine Akzeptanz kann höher als etwa bei herkömmlichen optischen und/oder akustischen Signalen sein. Ein aktives Fahrpedal mit haptischer Signalgebung kann daher neue Möglichkeiten bieten, den Fahrer vor Gefahren zu warnen und/oder dabei zu unterstützen, möglichst verbrauchsgünstig zu fahren. Mithin kann dieser Kommunikationskanal den Fahrer befähigen, Potenziale weiterer Fahrerassistenzsysteme für Verkehrssicherheit und/oder einen reduzierten Kraftstoffverbrauch ganz auszuschöpfen, siehe beispielsweise das in der Offenlegungsschrift DE 10 2014 015 287 A2 beschriebene Verfahren.

Fahrpedale, die dem Fahrer eine haptische Rückmeldung geben, sind bereits bekannt und werden auch als aktive Fahrpedale bezeichnet. Die haptischen Rückmeldungen können hierbei verschiedene Formen annehmen, wie zum Beispiel Anklopfen oder Vibration. Um derartige haptische Rückmeldungen zu erzeugen, gibt es verschiedene Möglichkeiten. Häufig wird dabei der ganze Pedalarm des Fahrpedals in Bewegung versetzt, oder die Bewegung wird direkt an der Trittplatte des Fahrpedals erzeugt.

Aus dem Stand der Technik ist es insbesondere bei Personenkraftwagen bekannt, Fahrpedale mit einer sog. Force-Feedback-Funktion auszustatten, die eine einstellbare, für den Fahrer spürbare Rückstellkraft auf ein Fahrpedal ausübt. Diese Gegenkraft oder Rückstellkraft dient dazu, dem Fahrer eine entsprechende haptische Information bzw. ein Signal zu übermitteln, um ihn zu veranlassen, das Fahrpedal oder Stellorgan entgegen der Betätigungskraft in eine Fahrpedal-Sollposition zu bewegen oder in dieser zu halten. Derartige Fahrpedale werden auch Force-Feedback-Fahrpedale genannt. Die DE 10 2007 021 982 A1 beschreibt beispielsweise den konstruktiven Aufbau eines solchen Fahrpedals mit Force-Feedback-Funktion. Derartige Fahrpedale mit Force-Feedback-Funktion sind vergleichsweise kostenaufwändig.

Aus der DE 10 2011 081 071 A1 ist eine Fahrpedaleinheit für ein Kraftfahrzeug bekannt, bei der unterhalb der Pedalplatte ein Aktuator angeordnet ist, der eine Vibration oder ein Klopfen an der Pedalplatte erzeugen kann. Nachteilig hieran ist, dass der Bauraum unterhalb der Pedalplatte oftmals beschränkt ist.

Aus der DE 10 2014 220 460 A1 und der DE 10 2014 220 466 A1 sind Ansätze bekannt, bei denen zur haptischen Signalgebung am Fahrpedal ein Signalelement und beabstandet hierzu am Pedalhebel ein Aktuator vorgesehen ist, der über eine Welle in Antriebsverbindung mit dem Signalelement steht. Diese Lösungen sind nachteilig, weil zur haptischen Signalgebung zwei Baugruppen, nämlich Signalelement und Aktuator, vonnöten sind, die beabstandet voneinander am Fahrpedalmodul angebracht werden müssen. Dieser Ansatz ist kostenaufwändig in der Montage und Teileherstellung und beansprucht vergleichsweise viel Bauraum.

DE 195 06 629 A1 beschreibt eine Fahrpedalanordnung zur Anzeige von unvorteilhaften Betriebsbereichen über die Veränderung einer Rückstellkraft durch eine elektromotorische Stelleinrichtung, die direkt oder indirekt auf das Fahrpedal einwirkt.

DE 25 55 429 A1 offenbart ein Verfahren zur taktilen Anzeige von binären Warnsignalen für den Lenker eines Kraftfahrzeugs durch mechanische Vibration auf das Gaspedal.

DE 20 2010 007 324 U1 betrifft ein Fahrpedal mit Mitteln zum Übermitteln haptischer Signale über das Fahrpedal an einen Fahrer, wobei ein Teil einer Bedienplatte um eine Achse drehbar in dem Pedalhebel des Fahrpedals gelagert ist. Die Mittel zum Übermitteln haptischer Signale bewirken hin- und hergehende Schwenkbewegungen der Bedienplatte.

US 9 072 576 B2 bezieht sich auf einen linearen Aktuator, der eine lineare Hin- und Herbewegung bereitstellt. Die Bewegung wird durch die gesteuerte Wirkung zumindest einen variablen Magnetfelds auf Permanentmagneten induziert. Zumindest ein elastisches Mittel bewirkt im ausgelenkten Zustand eine Rückbewegung.

Es ist daher eine Aufgabe der Erfindung, eine Fahrpedalvorrichtung mit haptischer Signalgebung bereitzustellen, mit der Nachteile bekannter Fahrpedalvorrichtungen vermieden werden können. Die Aufgabe der Erfindung ist es insbesondere, eine Fahrpedalvorrichtung mit haptischer Signalgebung bereitzustellen, die kostengünstig realisierbar ist und bei beschränktem Bauraum flexibel einsetzbar ist.

Diese Aufgaben werden durch eine Fahrpedalvorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Fahrpedalvorrichtung für ein Kraftfahrzeug bereitgestellt, aufweisend eine Pedaleinheit mit einem von einem Fahrer des Kraftfahrzeugs betätigbaren Pedalhebel, welcher an einem ersten Ende eine Pedalplatte aufweist und welcher an einem dem ersten Ende gegenüberliegenden zweiten Ende um eine Drehachse drehbar gelagert ist. Die Pedalplatte wird auch als Trittplatte des Fahrpedals bezeichnet. Der Fahrpedalhebel wird auch als Fahrpedalarm bezeichnet. Die Fahrpedalvorrichtung umfasst ferner einen an dem Pedalhebel gehaltenen elektromechanischen Aktuator zur haptischen Signalgebung, dessen Krafterzeugung eine Hin- und Herbewegung des Pedalhebels um die Drehachse bewirkt. Die vom Aktuator verursachte Hin- und Herbewegung des Pedalhebels wird nur erzeugt, wenn der Aktuator aktiviert ist, d. h. in Betriebsphasen des Fahrzeugs, in denen über das Fahrpedal haptische Meldungen bzw. Signale an den Fahrer übermittelt werden sollen.

Die Hin- und Herbewegung ist vorzugsweise so schnell, dass diese als Klopfen oder Vibration der Pedalplatte vom Fahrer haptisch wahrgenommen wird, d. h. durch den auf der Pedalplatte aufliegenden Fuß vom Fahrer. Die vorgeschlagene Lösung ist kostengünstiger realisierbar als herkömmliche Force-Feedback-Lösungen, und durch die Halterung des Aktuators am Pedalhebel wird kein Bauraum unterhalb der Pedalplatte benötigt. Ein weiterer Vorteil ist die Geräuschlosigkeit einer solchen Anordnung zum Erzeugen haptischer Signale im Vergleich zu Ansätzen, bei denen ein Signalgeber an die Unterseite der Pedalplatte schlägt. Ferner ist besonders vorteilhaft, wenn der Aktuator eine unmittelbare Hin- und Herbewegung des Pedalhebels um die Drehachse bewirkt und nicht mittelbarbar über ein zusätzliches mit dem Aktuator in Wirkverbindung stehendes Signalelement, was somit nicht erforderlich ist. Die haptische Signalgebung kann somit unmittelbar vom Aktuator selbst erzeugt werden.

Gemäß der Erfindung ist der Aktuator als Hubmagnet ausgeführt, aufweisend mindestens eine stationäre Spule und einen längs einer Spulenachse der mindestens einen stationären Spule beweglichen ferromagnetischen Kern. Hierbei kann der ferromagnetische Kern eine Masseerhöhung durch Metall oder ein anderes Material hoher Dichte aufweisen, wodurch die erzeugbare Impulse und damit haptische Wahrnehmbarkeit des erzeugten Signals verbessert werden können. Durch Wahl der Masse und/oder Länge des ferromagnetischen Kerns und durch die Auslegung der mindestens einen stationären Spule können die Dauer und Stärke der durch den Aktuator erzeugten Kraft eingestellt werden.

Gemäß einem weiteren Aspekt können sich die axialen Stirnseiten des ferromagnetischen Kerns jeweils an einer Feder abstützen. Hierbei kann der ferromagnetische Kern durch eine Rückstelleinrichtung mit zwei gegensinnig wirkenden Federn in einer Mittelstellung zentriert sein und durch die mindestens eine stationäre Spule nach beiden Seiten auslenkbar sein. Beispielsweise kann eine erste Feder mit einem ersten Ende und einem zweiten Ende vorgesehen sein, wobei das erste Ende der ersten Feder in Kontakt mit einem ersten Endbereich, z. B. einer Endplatte, des Aktuators steht und das zweite Ende der ersten Feder in Kontakt mit einem ersten axialen Ende des ferromagnetischen Kerns steht. Ferner kann eine zweite Feder mit einem ersten Ende und einem zweiten Ende vorgesehen sein, wobei das erste Ende der zweiten Feder in Kontakt mit einem zweiten Endbereich, z. B. einer weiteren Endplatte, des Aktuators steht und das zweite Ende der zweiten Feder in Kontakt mit einem zweiten axialen Ende des ferromagnetischen Kerns steht. Die Anordnung der Federn gemäß diesen Varianten unterstützt das Erzeugen von kraftvollen, schnellen Hin- und Herbewegungen des Pedalhebels.

Gemäß einer besonders bevorzugten Variante der Ausführungsformen als Hubmagnet kann dieser als Doppelhubmagnet ausgeführt sein, so dass die mindestens eine Spule so angesteuert, insbesondere bestromt wird, dass der ferromagnetische Kern aktive Hubbewegungen, d. h. Auslenkungen, nach beiden Seiten ausführt.

Gemäß einer weiteren besonders vorteilhaften Variante weist der Hubmagnet mindestens zwei stationäre Spulen auf. Die mindestens zwei stationären Spulen haben einen gemeinsamen ferromagnetischen Kern. Weiter vorzugsweise weist der Hubmagnet genau zwei stationäre Spulen auf. Hierbei ist es ferner vorteilhaft, wenn die mindestens zwei stationären Spulen oder die genau zwei stationären Spulen koaxial zueinander angeordnet sind, d. h. eine gemeinsame Spulenachse aufweisen, und in Richtung der gemeinsamen Spulenachse versetzt zueinander angeordnet sind. Dies verbessert die Erzeugung von kurzen, schnellen und kraftvollen Auslenkbewegungen des gemeinsamen ferromagnetischen Kerns, die wiederum die Hin- und Herbewegungen des Pedalhebels erzeugen.

Hierbei kann die Fahrpedalvorrichtung eine Steuereinrichtung aufweisen, die ausgeführt ist, zur haptischen Signalgebung die mindestens zwei stationären Spulen zu bestromen, derart, dass der ferromagnetische Kern abwechselnd nach den beiden Seiten ausgelenkt wird, insbesondere abwechselnd aktiv nach beiden Seiten ausgelenkt wird.

Gemäß der Variante mit genau zwei stationären Spulen kann die Steuereinrichtung ausgeführt sein, zur haptischen Signalgebung die beiden stationären Spulen derart abwechselnd zu bestromen, dass die erste Spule im bestromten Zustand eine Auslenkung des ferromagnetischen Kerns in eine erste Richtung, d. h. zur ersten Seite, bewirkt und dass die zweite Spule im bestromten Zustand eine Auslenkung in eine zur ersten Richtung entgegengesetzte zweite Richtung erzeugt, d. h. zur zweiten Seite bewirkt. Mit anderen Worten werden die beiden Spulen abwechselnd ein- und ausgeschaltet, wobei jede Spule für die Auslenkung in eine Richtung verantwortlich ist. Diese Variante ist aus Steuerungsgesichtspunkten besonders vorteilhaft und eignet sich besonders zur Erzeugung von Hin- und Herbewegungen, die als Klopfsignale an der Pedalplatte wahrnehmbar sind.

Selbstverständlich besteht auch die Möglichkeit, dass die beiden Spulen gleichzeitig betrieben bzw. gleichphasig bestromt werden, so dass sich Ihre auf dem Kern erzeugten Kräfte addieren. Durch Umpolen ist gemäß dieser Variante auch eine Auslenkung in beiden Richtungen aktiv erzeugbar.

Im Rahmen der Entwicklung der Erfindung wurde festgestellt, dass der bewegliche Teil der Spule, insbesondere der ferromagnetische Kern, schnell hin- und her bewegt werden muss, jedoch gleichzeitig unter Aufbringung großer Kraftimpulse, was große Stromstärke der Spule und/oder eine möglichst hohe Masse des Kerns erfordert. Damit das mittels des Aktuators an der Pedalplatte erzeugte haptische Feedback Klopfsignalen ähnelt, ist es gemäß einem weiteren Aspekt vorteilhaft, wenn die mindestens eine stationäre Spule zur haptischen Signalgebung im Millisekunden-Bereich angesteuert wird. Die Spulen des Aktuators können entsprechend mit einem Taktverhältnis angesteuert werden, das in der Größenordnung von Millisekunden liegt. Beispielweise kann die Steuereinrichtung ausgeführt sein, zur haptischen Signalgebung die beiden stationären Spulen derart anzusteuern, dass sich die Hinbewegungen und Herbewegungen des Pedalhebels um die Drehachse bei der haptischen Signalgebung im Millisekunden-Bereich abwechseln. Durch die jeweils kurze Bestromungszeit wird eine Überhitzung der Spulen vermieden.

Ferner kann das Taktverhältnis, mit dem die Spulen angesteuert werden, beispielsweise ein Einschalt-Pausen-Taktverhältnis sein, falls die beiden Spulen abwechselnd bestromt werden, oder ein Phasen-Gegenphasen-Taktverhältnis sein, falls die beiden Spulen gleichzeitig bestromt werden und gleichsinnig auf den ferromagnetischen Kern wirken. Zur Variation der erzeugten haptischen Signale können die Frequenz und Häufigkeit der Taktsignale variiert werden.

Der Aktuator kann an verschiedenen Stellen des Pedalhebels befestigt werden. Vorteilhaft ist, wenn der Aktuator am Pedalhebel so angeordnet ist, dass die vom Aktuator erzeugte Kraft senkrecht oder zumindest möglichst senkrecht zu einer Radialrichtung wirkt, die in Richtung des Abstandsvektors des Aktuators zur Drehachse des Pedalhebels liegt. Dadurch wird ein möglichst großer Anteil der vom Aktuator erzeugten Kräfte zur Erzeugung der Hin- und Herbewegung des Hebelarms verwendet und die Beanspruchung der Lager am Drehpunkt möglichst klein gehalten.

Beispielsweise ist es vorteilhaft, eine Positionierung des Hubmagneten am Pedalhebel derart festzulegen, dass die Bewegungsrichtung des ferromagnetischen Kerns im Wesentlichen in Tangentialrichtung, weiter vorzugsweise in Tangentialrichtung erfolgt, wobei die Tangentialrichtung senkrecht zur vorgenannten Radialrichtung ist bzw. diejenige Richtung ist, in der ein Abschnitt des Pedalhebels, an dem der Aktuator befestigt ist, bei Drehung um die Drehachse ausgelenkt wird. Der Ausdruck "im Wesentlichen in Tangentialrichtung" soll Winkel der Spulenachse zur Tangentialrichtung von kleiner 30 Grad, weiter vorzugsweise kleiner 10 Grad umfassen. Je kleiner der Winkel, desto effizienter ist die Kraftausnutzung und desto kleiner die Lagerbeanspruchung.

Alternativ kann eine Anordnung des Hubmagneten am Pedalhebel auch über die Kraftkomponenten des erzeugten Kraftvektors des Hubmagneten charakterisiert werden. Die Krafterzeugung bzw. der resultierende Kraftvektor des Hubmagneten kann in eine erste Kraftkomponente, die zu einer Drehbewegung des Pedalhebels um die Drehachse führt, und in eine zweite hierzu senkrechte Kraftkomponente, die zu einer Zug- oder Druckkraft auf ein Lager der Drehachse führt, zerlegt werden. Beispielsweise ist es vorteilhaft, den Hubmagneten so am Pedalhebel anzuordnen, dass die erste Kraftkomponente betragsmäßig mindestens 70 %, weiter vorzugweise mindestens 85 %, weiter vorzugsweise mindestens 95 % der Krafterzeugung des Hubmagneten ausmacht.

Die Erfindung betrifft ferner ein Kraftfahrzeug, insbesondere ein Nutzfahrzeug, aufweisend eine Fahrpedalvorrichtung wie in diesem Dokument beschrieben.

Weitere Einzelheiten und Vorteile der Erfindung werden im Folgenden unter Bezug auf die beigefügten Zeichnungen beschrieben. Es zeigen:
- Figur 1: eine Fahrpedalvorrichtung gemäß einer Ausführungsform der Erfindung;
- Figur 2A: eine Seitenansicht einer Ausführung des Aktuators als Hubmagnet gemäß einer Ausführungsform der Erfindung;
- Figur 2B: eine Draufsicht der Ausführungsform der Figur 2A; und
- Figur 2C: eine perspektivische Sicht der Ausführungsform der Figur 2A.

Gleiche oder funktional äquivalente Elemente sind in allen Figuren mit denselben Bezugszeichen bezeichnet und sind zum Teil nicht gesondert beschrieben.

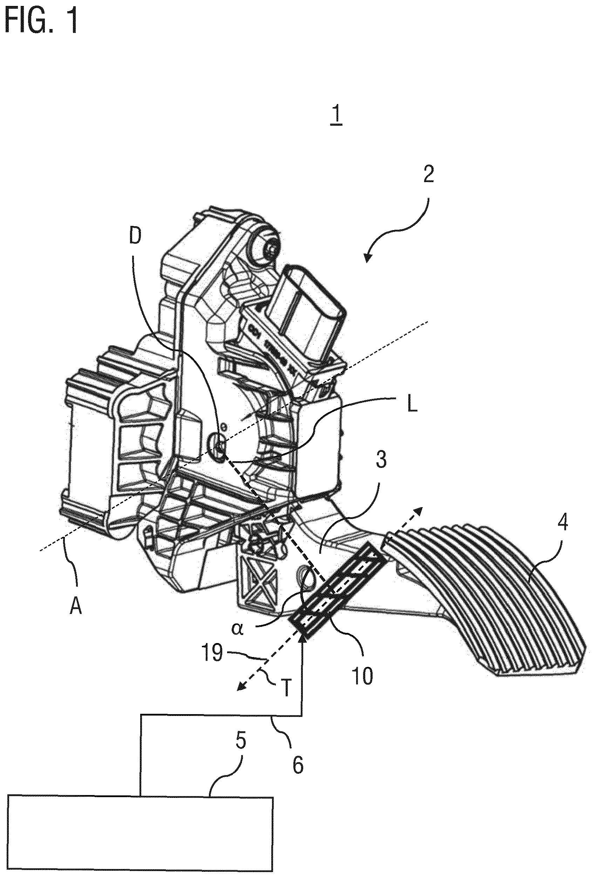

Figur 1 zeigt eine Pedalvorrichtung 1 für ein Kraftfahrzeug gemäß einer Ausführungsform der Erfindung. Das Kraftfahrzeug ist vorliegend ein Nutzfahrzeug. Die Pedalvorrichtung 1 umfasst eine an sich bekannte Pedaleinheit 2 mit einem von einem Fahrer des Kraftfahrzeugs betätigbaren Pedalhebel 3, welcher an einem ersten Ende eine Pedalplatte 4 aufweist und welcher an einem dem ersten Ende gegenüberliegenden zweiten Ende um eine Drehachse A drehbar gelagert ist. Die restlichen Komponenten der Pedaleinheit können in an sich bekannter Weise ausgeführt sein und müssen daher vorliegend nicht näher beschrieben werden.

Die Pedalvorrichtung 1 umfasst ferner einen an dem Pedalhebel 3 gehaltenen elektromechanischen Aktuator 10 zur haptischen Signalgebung, dessen Krafterzeugung eine Hin- und Herbewegung des Pedalhebels 3 um die Drehachse A bewirkt. Die Hin- und Herbewegung überträgt sich demzufolge auf die Pedalplatte 4 und kann vom Fahrer als haptisches Signal wahrgenommen werden. Wenn die vom Aktuator 10 erzeugte Hin- und Herbewegung entsprechend schnell erfolgt, wird dies als Vibration oder Klopfen der Pedalplatte 4 wahrgenommen.

Die Pedalvorrichtung 1 umfasst ferner eine Steuereinrichtung 5, die in signaltechnischer Wirkverbindung, z. B. über eine Steuerleitung 6 oder ein Datenbus, mit dem Aktuator 10 steht, um diesen zur haptischen Signalgebung zu aktivieren und anzusteuern oder zu deaktivieren. Die Steuereinrichtung 5 kann als separate Elektronikeinheit ausgeführt sein oder programmtechnisch als Teil einer weiteren Fahrzeugsteuereinheit ausgeführt sein.

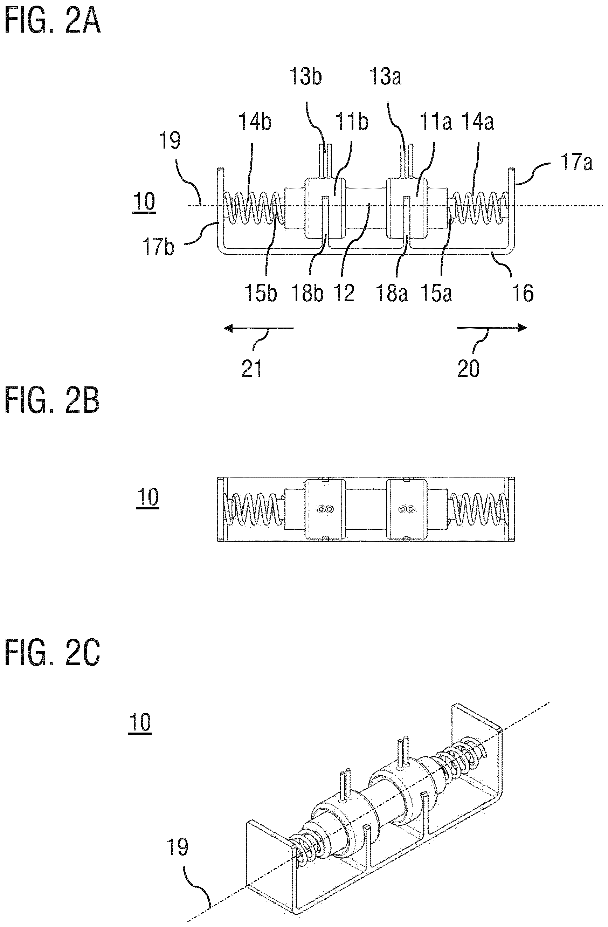

Die Figuren 2A bis 2C zeigen den Aufbau und die Funktionsweise des Aktuators 10 gemäß einem Ausführungsbeispiel, gemäß dem der Aktuator als Hubmagnet ausgeführt ist. Figur 2A zeigt eine Seitenansicht des Aktuators, Figur 2B eine Draufsicht und Figur 2C eine perspektivische Sicht der Ausführungsform der Figur 2A.

Der Hubmagnet umfasst zwei koaxial, aber in Axialrichtung versetzt zueinander angeordnete stationäre Spulen 11a, 11b. Die Spulen 11a, 11b umgeben einen gemeinsamen, längs der Spulenachse 19 beweglichen ferromagnetischen Kern 12, der von einer Fassung umhaust ist. Der Kern ist mittels einer nicht dargestellten Führungsmechanik in Richtung der Spulenachse 19 beweglich gelagert. Beispielsweise können die Spulengehäuse als Gleitlager dienen. Der ferromagnetische Kern 12 wird durch zwei gegensinnig wirkende Federn 14a, 14b in einer Mittelstellung zentriert und ist durch die beiden Spulen 11a, 11b nach beiden Seiten entlang der Spulenachse 19 auslenkbar. Die beiden Auslenkrichtungen sind durch die Pfeile 20 und 21 dargestellt.

Insbesondere ist eine erste Feder 14a mit einem ersten Ende und einem zweiten Ende vorgesehen, wobei das erste Ende der ersten Feder 14a in Kontakt mit einer Endplatte 17a des Aktuators 10 steht und wobei das zweite Ende der ersten Feder 14a in Kontakt mit einem ersten axialen Ende 15a des ferromagnetischen Kerns 12 steht. Ferner ist eine zweite Feder 14b mit einem ersten Ende und einem zweiten Ende vorgesehen, wobei das erste Ende der zweiten Feder 14b in Kontakt mit einer weiteren Endplatte 17b des Aktuators 10 steht und wobei das zweite Ende der zweiten Feder 14b in Kontakt mit einem zweiten axialen Ende 15b des ferromagnetischen Kerns 12 steht. Die Anordnung der Federn 14a, 14b gemäß diesen Varianten unterstützt das Erzeugen von kraftvollen, schnellen Hin- und Herbewegungen des Pedalhebels 3.

Die beiden Endplatten 17a, 17b sind über eine Bodenplatte 16 verbunden, an der ferner auf Höhe der Spulen 11a, 11b jeweils zwei Befestigungsschenkel 18a, 18b abragen, mittels derer die stationären Spulen 11a, 11b gehaltert sind. Die Stromversorgung der Spule 11a erfolgt über die Anschlussleitungen 13a. Die Stromversorgung der Spule 11b erfolgt über die Anschlussleitungen 13b. Die stationären Spulen 11a, 11b sind starr am Pedalhebel 3 befestigt, z. B. mittels der Bodenplatte 16.

Über die Steuereinrichtung 5 können die Spulen 11a und 11b so bestromt werden, dass diese eine Kraft im ferromagnetischen Kern 12 induzieren, die zu einer Auslenkbewegung des Kerns 12 in den Richtungen 20 und 21 führen. Die Steuereinrichtung 5 steht hierzu in Kommunikationsverbindung mit mindestens einem Fahrerassistenzsystem (nicht gezeigt) des Kraftfahrzeugs, das der Steuereinrichtung signalisiert 5, wann im Fahrbetrieb über das Fahrpedal dem Fahrer ein haptischer Hinweis geben werden soll, um den Fahrer z. B. zu einer kraftstoffsparenden Fahrweise zu bewegen.

Bekommt die Steuereinrichtung 5 von dem mindestens einen Fahrerassistenzsystem signalisiert, dass ein haptisches Signal an den Fahrer über das Fahrpedal erzeugt werden soll, steuert die Steuereinrichtung 5 die beiden stationären Spulen 11a und 11b an. Die Ansteuerung erfolgt hierbei derart, dass die beiden stationären Spulen 11a, 11b abwechselnd für wenige Millisekunden mit Strom versorgt werden, wobei die erste Spule 11a im bestromten Zustand eine Auslenkung des ferromagnetischen Kerns in eine erste Richtung 20 und die zweite Spule 11b im bestromten Zustand eine Auslenkung in eine zur ersten Richtung entgegengesetzte zweite Richtung 21 erzeugt. Die abwechselnde Bestromung der beiden Spulen 11a, 11b erzeugt somit eine Hin- und Herbewegung des ferromagnetischen Kerns 12 entlang der Achse 19.

Da die stationären Spulen 11a, 11b mittelbar oder unmittelbar starr am Pedalhebel befestigt sind, bewirkt die Hin- und Herbewegung des ferromagnetischen Kerns 12 eine am Hebelarm 3 angreifende Kraft, die eine schnelle Hin- und Herbewegung des Pedalhebels um den Drehpunkt D bzw. um die Drehachse A des Pedalhebels 3 erzeugt. Je nach Geschwindigkeit und Taktung wird diese schnelle Hin- und Herbewegung des Pedalhebels 3 um die Drehachse A des Pedalhebels 3 vom Fahrer als vibrierendes Signal oder als Klopfen an der Fahrpedalplatte 4 wahrgenommen. Zur Erzeugung unterschiedlicher haptischer Feedbacksignale können die Frequenz und Häufigkeit der Taktsignale variiert werden.

Hierbei ist der Aktuator 10 in solch einer Ausrichtung am Pedalhebel 3 angeordnet, dass die Spulenachse 19 und damit die Bewegungsrichtung 20,21 des Kerns 12 und damit die vom Aktuator 10 erzeugte Kraft senkrecht (oder zumindest möglichst senkrecht) zu einer Radialrichtung L wirken, die in Richtung des Abstandsvektors des Aktuators 20 zur Drehachse S des Pedalhebels 3 liegt. Mit anderen Worten ist die Bewegungsrichtung 20, 21 des Kerns 12 bzw. die Spulenachse 19 parallel zu einer Tangentialrichtung T, wobei die Tangentialrichtung senkrecht zur vorgenannten Radialrichtung L ist und die Richtung einer Auslenkung des Pedalhebels 3 an der Befestigungsstelle des Aktuators 10 bei einer Drehung um den Drehpunkt D angibt. In Figur 1 bezeichnet α den Winkel zwischen der Radialrichtung L und der Spulenachse 19. Der Winkel α beträgt hier im Wesentlichen 90 Grad, so dass die Spulenachse 19 und damit die Bewegungsrichtung des Kerns 12 parallel zur Bewegungsrichtung des Pedalhebels 3 bei Drehung um die Drehachse A ist, d. h. parallel ist zur Tangentialrichtung T. Wäre der Aktuator 10 statt in der in Figur 1 gezeigten Position näher zur Drehachse A am Pedalhebel 3 befestigt, wäre die Ausrichtung am Pedalhebel 3 mehr zur Horizontalen hin geneigt. Umgekehrt, wäre der Aktuator 10 statt in der in Figur 1 gezeigten Position näher an der Pedalplatte 4 am Pedalhebel 3 befestigt, wäre die Ausrichtung am Pedalhebel 3 mehr zur Vertikalen hin geneigt, um die Bewegungsrichtung des Kerns 12 senkrecht zur Verbindung zum Drehpunkt D des Pedalhebels 3 auszurichten.

### Bezugszeichenliste

- 1: Fahrpedalvorrichtung
- 2: Pedaleinheit
- 3: Pedalhebel
- 4: Pedalplatte
- 5: Steuereinrichtung
- 6: Signalleitung
- 10: Aktuator, z. B. Hubmagnet
- 11a, 11b: Spule
- 12: Ferromagnetischer Kern
- 13a, 13b: Stromversorgungsleitungen
- 14a, 14b: Feder
- 15a, 15b: Axialer Endbereich des ferromagnetischen Kerns
- 16: Bodenplatte
- 17a, 17b: Endplatte
- 18a,18b: Befestigungsschenkel
- A: Drehachse
- D: Drehpunkt
- L: Radialrichtung
- T: Tangentialrichtung

## Patentansprüche

1. Fahrpedalvorrichtung (1) für ein Kraftfahrzeug, aufweisend:
eine Pedaleinheit (2) mit einem von einem Fahrer des Kraftfahrzeugs betätigbaren Pedalhebel (3), welcher an einem ersten Ende eine Pedalplatte (4) aufweist und welcher an einem dem ersten Ende gegenüberliegenden zweiten Ende um eine Drehachse (A) drehbar gelagert ist; und
einen an dem Pedalhebel (3) gehaltenen elektromechanischen Aktuator (10) zur haptischen Signalgebung, dessen Krafterzeugung eine Hin- und Herbewegung des Pedalhebels (3) um die Drehachse (A) bewirkt, **dadurch gekennzeichnet, dass** der Aktuator (10) als Hubmagnet ausgeführt ist, aufweisend mindestens eine starr am Pedalhebel (3) befestigte, stationäre Spule (11a, 11b) und einen längs einer Spulenachse (19) der mindestens einen stationären Spule (11a, 11b) beweglichen ferromagnetischen Kern (12).

2. Fahrpedalvorrichtung (1) nach Anspruch 1, wobei die Krafterzeugung des Aktuators (10) eine unmittelbare Hin- und Herbewegung des Pedalhebels (3) um die Drehachse (A) bewirkt.

3. Fahrpedalvorrichtung (1) nach einem der vorhergehenden Ansprüche, wobei der ferromagnetische Kern (12) durch eine Rückstelleinrichtung mit zwei gegensinnig wirkenden Federn (14a, 14b) in einer Mittelstellung zentriert ist und durch die mindestens eine stationäre Spule (11a, 11b) nach beiden Seiten (20, 21) auslenkbar ist.

4. Fahrpedalvorrichtung (1) nach einem der vorhergehenden Ansprüche, wobei der Hubmagnet zwei stationäre Spulen (11a, 11b) aufweist, deren Spulenachse (19) parallel ist und die in Richtung der gemeinsamen Spulenachse versetzt zueinander angeordnet ist.

5. Fahrpedalvorrichtung (1) nach Anspruch 4, ferner umfassend eine Steuereinrichtung (5), die ausgeführt ist, zur haptischen Signalgebung die beiden stationären Spulen (11a, 11b) zu bestromen, derart, dass der ferromagnetische Kern (12) abwechselnd nach den beiden Seiten ausgelenkt wird.

6. Fahrpedalvorrichtung (1) nach Anspruch 5, wobei die Steuereinrichtung (5) ausgeführt ist, zur haptischen Signalgebung die beiden stationären Spulen (11a, 11b) derart abwechselnd zu bestromen, dass die erste Spule (11a) im bestromten Zustand eine Auslenkung des ferromagnetischen Kerns in eine erste Richtung (20) und die zweite Spule (11b) im bestromten Zustand eine Auslenkung in eine zur ersten Richtung entgegengesetzte zweite Richtung (21) erzeugt.

7. Fahrpedalvorrichtung (1) nach einem der Ansprüche 3 bis 6, wobei die mindestens eine stationäre Spule zur haptischen Signalgebung im Millisekundenbereich angesteuert wird.

8. Fahrpedalvorrichtung (1) nach einem der Ansprüche 5 bis 7, wobei die Steuereinrichtung (5) ausgeführt ist, zur haptischen Signalgebung die beiden stationären Spulen (11a, 11b) derart anzusteuern, dass sich die Hinbewegungen und Herbewegungen des Pedalhebels (3) um die Drehachse (A) bei der haptischen Signalgebung im Millisekundenbereich abwechseln.

9. Fahrpedalvorrichtung (1) nach einem der Ansprüche 3 bis 8, wobei eine Positionierung des Hubmagneten (10) am Pedalhebel (3) derart ist, dass die Bewegungsrichtung des ferromagnetischen Kerns (12) im Wesentlichen in Tangentialrichtung (T) erfolgt, wobei die Tangentialrichtung diejenige Richtung ist, in der ein Abschnitt des Pedalhebels (3), an welchem der Aktuator (10) befestigt ist, bei Drehung um die Drehachse (A) ausgelenkt wird.

10. Fahrpedalvorrichtung (1) nach einem der Ansprüche 3 bis 8, wobei der Hubmagnet (10) so am Pedalhebel (3) angeordnet ist, dass die Krafterzeugung des Hubmagneten (10) eine erste Kraftkomponente, die zu einer Drehbewegung des Pedalhebels (3) um die Drehachse (A) führt, und eine zweite hierzu senkrechte Kraftkomponente, die zu einer Zug- oder Druckkraft auf ein Lager der Drehachse führt, aufweist, wobei der Hubmagnet so am Pedalhebel (3) angeordnet ist, dass die erste Kraftkomponente betragsmäßig mindestens 70 %, weiter vorzugweise mindestens 85 %, weiter vorzugsweise mindestens 95 % der Krafterzeugung des Hubmagneten (10) ausmacht.

11. Kraftfahrzeug, insbesondere Nutzfahrzeug, aufweisend eine Fahrpedalvorrichtung (1) nach einem der Ansprüche 1 bis 10.

## Claims

1. Accelerator pedal device (1) for a motor vehicle, having:
a pedal unit (2) with a pedal lever (3) which can be activated by a driver of the motor vehicle and which has a pedal plate (4) at a first end and which is mounted so as to be rotatable about a rotational axis (A) at a second end lying opposite the first end; and
an electromechanical actuator (10) which is secured to the pedal lever (3) and has the purpose of generating haptic signals, the generation of force by which actuator (10) brings about a to and fro movement of the pedal lever (3) about the rotational axis (A), **characterized in that** the actuator (10) is embodied as a lifting magnet, having at least one fixed coil (11a, 11b) which is rigidly attached to the pedal lever (3), and a ferromagnetic core (12) which can move along a coil axis (19) of the at least one fixed coil (11a, 11b).

2. Accelerator pedal device (1) according to Claim 1, wherein the generation of force by the actuator (10) brings about an immediate to and fro movement of the pedal lever (3) about the rotational axis (A) .

3. Accelerator pedal device (1) according to one of the preceding claims, wherein the ferromagnetic core (12) is centred in a central position by a restoring device with two springs (14a, 14b) which act in opposite directions, and said ferromagnetic core (12) can be deflected to both sides (20, 21) by the at least one fixed coil (11a, 11b).

4. Accelerator pedal device (1) according to one of the preceding claims, wherein the lifting magnet has two fixed coils (11a, 11b), the coil axis (19) of which is parallel and which are arranged offset with respect to one another in the direction of the common coil axis.

5. Accelerator pedal device (1) according to Claim 4, also comprising a control device (5) which is designed, for the purpose of generating haptic signals, to energize the two fixed coils (11a, 11b) in such a way that the ferromagnetic core (12) is deflected alternately to both sides.

6. Accelerator pedal device (1) according to Claim 5, wherein the control device (5) is designed, for the purpose of generating haptic signals, to energize the two fixed coils (11a, 11b) alternately in such a way that in the energized state the first coil (11a) generates a deflection of the ferromagnetic core in a first direction (20), and in the energized state the second coil (11b) generates a deflection in a second direction (21) which is opposed to the first direction.

7. Accelerator pedal device (1) according to one of Claims 3 to 6, wherein the at least one fixed coil is actuated for the purpose of generating haptic signals in the millisecond range.

8. Accelerator pedal device (1) according to one of Claims 5 to 7, wherein the control device (5) is designed, for the purpose of generating haptic signals, to actuate the two fixed coils (11a, 11b) in such a way that the to and fro movements of the pedal lever (3) about the rotational axis (A) alternate in the millisecond range during the generation of haptic signals.

9. Accelerator pedal device (1) according to one of Claims 3 to 8, wherein the lifting magnet (10) is positioned on the pedal lever (3) in such a way that the direction of movement of the ferromagnetic core (12) occurs essentially in the tangential direction (T), wherein the tangential direction is that direction in which a section of the pedal lever (3) to which the actuator (10) is attached is deflected during rotation about the rotational axis (A).

10. Accelerator pedal device (1) according to one of Claims 3 to 8, wherein the lifting magnet (10) is arranged on the pedal lever (3) in such a way that the generation of force by the lifting magnet (10) has a first force component, which brings about a rotational movement of the pedal lever (3) about the rotational axis (A), and a second force component, perpendicular thereto, which brings about a tensile force or compression force on a bearing of the rotational axis, wherein the lifting magnet is arranged on the pedal lever (3) in such a way that the first force component is at least 70% in absolute terms, more preferably at least 85% and more preferably at least 95% of the generation of force by the lifting magnet (10).

11. Motor vehicle, in particular a utility vehicle, having an accelerator pedal device (1) according to one of Claims 1 to 10.

## Revendications

1. Arrangement de pédale d'accélérateur (1) pour un véhicule automobile, comprenant :
une unité de pédale (2) comprenant un levier de pédale (3) qui peut être actionné par un conducteur du véhicule automobile, lequel possède une plaque de pédale (4) à une première extrémité et lequel est monté à rotation autour d'un axe de rotation (A) au niveau d'une deuxième extrémité opposée à la première extrémité ; et
un actionneur (10) électromécanique servant à la transmission de signal haptique maintenu au levier de pédale (3), dont la génération de force produit un mouvement de va-et-vient du levier de pédale (3) autour de l'axe de rotation (A), **caractérisé en ce que** l'actionneur (10) est réalisé sous la forme d'un électroaimant de levage qui possède au moins une bobine (11a, 11b) fixe, fixée de manière rigide au levier de pédale (3), et un noyau ferromagnétique (12) mobile le long d'un axe de bobine (19) de l'au moins une bobine (11a, 11b) fixe.

2. Arrangement de pédale d'accélérateur (1) selon la revendication 1, la génération de force par l'actionneur (10) produisant un mouvement de va-et-vient direct du levier de pédale (3) autour de l'axe de rotation (A) .

3. Arrangement de pédale d'accélérateur (1) selon l'une des revendications précédentes, le noyau ferromagnétique (12) étant centré dans une position centrale par un dispositif de rappel pourvu de deux ressorts (14a, 14b) agissant en sens inverse et pouvant être dévié vers les deux côtés (20, 21) par l'au moins une bobine (11a, 11b) fixe.

4. Arrangement de pédale d'accélérateur (1) selon l'une des revendications précédentes, l'électroaimant de levage possédant deux bobines (11a, 11b) fixes dont l'axe de bobine (19) est parallèle et qui sont disposées décalées l'une par rapport à l'autre dans la direction de l'axe de bobine commun.

5. Arrangement de pédale d'accélérateur (1) selon la revendication 4, comprenant en outre un dispositif de commande (5) qui, en vue de la transmission de signal haptique, est réalisé pour alimenter électriquement les deux bobines (11a, 11b) fixes de telle sorte que le noyau ferromagnétique (12) est dévié en alternance vers les deux côtés.

6. Arrangement de pédale d'accélérateur (1) selon la revendication 5, le dispositif de commande (5) étant exécuté, en vue de la transmission de signal haptique, pour alimenter électriquement les deux bobines (11a, 11b) fixes en alternance de telle sorte que la première bobine (11a), à l'état alimenté électriquement, génère une déviation du noyau ferromagnétique dans une première direction (20) et la deuxième bobine (11b), à l'état alimenté électriquement, une déviation du noyau ferromagnétique dans une deuxième direction (21) opposée à la première direction.

7. Arrangement de pédale d'accélérateur (1) selon l'une des revendications 3 à 6, l'au moins une bobine fixe servant à la transmission de signal haptique étant excitée dans la plage des millisecondes.

8. Arrangement de pédale d'accélérateur (1) selon l'une des revendications 5 à 7, le dispositif de commande (5) étant exécuté pour, en vue de la transmission de signal haptique, exciter les deux bobines (11a, 11b) fixes de telle sorte que les mouvements d'aller et les mouvements de retour du levier de pédale (3) autour de l'axe de rotation (A) alternent lors de la transmission de signal haptique dans la plage des millisecondes.

9. Arrangement de pédale d'accélérateur (1) selon l'une des revendications 3 à 8, un positionnement de l'électroaimant de levage (10) au niveau du levier de pédale (3) étant tel que la direction du mouvement du noyau ferromagnétique (12) s'effectue sensiblement dans la direction tangentielle (T), la direction tangentielle étant la direction dans laquelle une portion du levier de pédale (3) à laquelle est fixée l'actionneur (10) est déviée lors de la rotation autour de l'axe de rotation (A) .

10. Arrangement de pédale d'accélérateur (1) selon l'une des revendications 3 à 8, l'électroaimant de levage (10) étant disposé au niveau du levier de pédale (3) de telle sorte que la génération de force par l'électroaimant de levage (10) possède une première composante de force, laquelle donne lieu à un mouvement de rotation du levier de pédale (3) autour de l'axe de rotation (A), et une deuxième composante de force perpendiculaire à celle-ci, laquelle donne lieu à une force de traction ou de pression sur un palier de l'axe de rotation, l'électroaimant de levage étant disposé au niveau du levier de pédale (3) de telle sorte que la première composante de force représente, en valeur, au moins 70 %, de préférence au moins 85 %, plus préférablement au moins 95 % de la génération de force par l'électroaimant de levage (10).

11. Véhicule automobile, notamment véhicule utilitaire, comprenant un arrangement de pédale d'accélérateur (1) selon l'une des revendications 1 à 10.
